Europäisches Patentamt

(19) European Patent Office

Office européen des brevets

(11) Publication number : **0 164 885**
**B1**

(12) # EUROPEAN PATENT SPECIFICATION

(45) Date of publication of patent specification :
22.02.89

(51) Int. Cl.⁴ : **G 01 F   1/68**

(21) Application number : 85303223.3

(22) Date of filing : 07.05.85

(54) **Fluid flow sensor.**

(30) Priority : 07.05.84 US 607547

(43) Date of publication of application :
18.12.85 Bulletin 85/51

(45) Publication of the grant of the patent :
22.02.89 Bulletin 89/08

(84) Designated contracting states :
DE GB NL SE

(56) References cited :
DD–A– 209 907
DE–A– 2 906 847
US–A– 4 409 828
ELEKTRONIK, no. 9, May 6, 1983, München. R. WEIS-
SEL, H. SCHAUMBURG "Polysiliziumsensoren erfas-
sen Temperatur und Strömung", pages 86-90

(73) Proprietor : HONEYWELL INC.
Honeywell Plaza
Minneapolis Minnesota 55408 (US)

(72) Inventor : Bohrer, Philip J.
2604 West 55th Street
Minneapolis Minnesota 55410 (US)

(74) Representative : Frohwitter, Bernhard, Dipl.-Ing.
Bardehle-Pagenberg-Dost-Altenburg & Partner
Patent- und Rechtsanwälte Galileiplatz 1 Postfach 86
06 20
8000 München 80 (DE)

## Description

In recent years flow sensing devices, particularly gas flow sensing devices, have been designed and built by the use of technology comparable to integrated circuit technology. The devices are manufactured into silicon structures and can be manufactured to very small dimensions. Many of these flow sensing devices utilize temperature responsive resistors that are mounted either adjacent to or directly upon the silicon area. As such, integrated circuit technology can be utilized in the fabrication of the necessary electrical circuits for these devices.

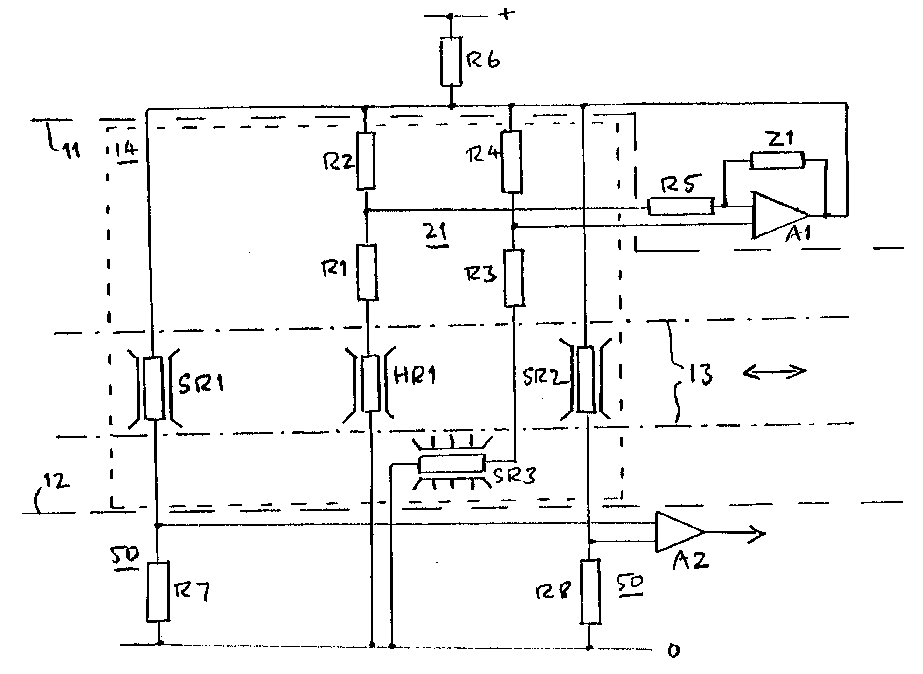

The article of R. Weissel, H. Schaumburg « Polysiliziumsensoren erfassen Temperatur und Strömung » in Elektronik, No. 9, May 6, 1983, München, pages 86-90, especially Fig. 7, relates to a gas flow rate sensor as referred to above. A heater resistor is provided which is flanked by two sensor resistors. All resistors are fabricated on a common polysilicon chip. A linearization of the output signal can be achieved by analog means (parallel resistors or diode networks) or digital means (a ROM and a microprocessor). These linearization means are very complex and costly. No details on decreasing the dependance of the sensor on the ambient temperature are given in this article.

Due to their exceedingly small physical dimensions, these devices are capable of responding very rapidly as they have a very small mass which allows thermal changes to occur rapidly. For gas flow sensors based on thermal conductance, flow sensitivity depends on the difference between the ambient gas temperature and the heater temperature. The greater the difference between the heater temperature and the ambient temperature, the larger the signal for a given flow.

If the heater utilized in this type of device is controlled at a constant temperature, an increase in ambient temperature will result in a decrease in the difference between the heater and ambient temperatures. But for pressure difference or flow velocity sensing applications, even a constant temperature difference between a heater and ambient results in a sensor response that increases with decreasing ambient temperature.

A further prior art document (DE-A-29 06 847) relates to measuring the flow rate of the air in the intake of a combustion engine. The flow rate is measured by a heater resistor (wire or thin film) in series with a sensor resistor in one branch of a Wheatstone bridge. A further heater resistor is provided through which a constant current is fed. The voltage drop across this further heater resistor is amplified and added to the output voltage of the bridge. This modified output voltage is amplified and used to feed the bridge thus taking into account the temperature of the air in the intake. The sensor described in this article is not suitable for a three-device flow rate sensor and does not allow to decrease the dependance of the sensor on the ambient temperature.

The object of the present invention is therefore to provide means for compensating for changes in ambient temperature.

Accordingly the present invention provides a fluid flow rate sensor comprising a heater resistor in the fluid stream, and a sensor bridge including sensor resistor means in the fluid stream beyond the heater resistor, characterized in that the heater resistor is included in a heater bridge including also a temperature responsive resistor thermally coupled to the heater resistor and/or the sensor resistor means but out of the fluid stream, the output of the heater bridge being used to energize at least one of the two bridges.

By this means, the heater temperature is preferably so controlled that the temperature difference between the heater temperature and ambient temperature is increased as the ambient temperature increases, so reducing the temperature dependence of the sensor.

This can be combined with means for increasing, as the ambient temperature increases, the drive current through the flow responsive resistor means which sense temperature. In the present type of sensor, the heater resistor is normally flanked by a pair of sensing resistors arranged in a bridge for sensing the voltage difference between them. If the drive voltage to this bridge is increased with an increase of ambient temperature, the temperature dependence of the sensor can be further reduced.

Also, it is possible to arrange for a slight self-heating, by sufficient power dissipation, in the sensing resistors. For a given power dissipation, self-heating is greatest at low fluid flows. Higher flow dissipates the power. Self-heating can be designed to have significant effect at no flow and low flows, with the effect diminishing with increased flow, so that at higher flows it has negligible effect. It can thus alter the shape of the response characteristic.

In the typical sensor arrangement, the sensor's temperature coefficient of resistance is positive and increasing ambient temperature results in an increased resistance. This in turn increases the self-heating, and the increased self-heating results in greater flow response by the sensing means.

The effects of all of the factors involved can be utilized or controlled, and a highly dependable sensor thus results.

A flow sensor embodying the invention will now be described, by way of example, with reference to the drawing, which is a block and circuit diagram.

The sensor has a housing with walls 11 and 12 which define a fluid flow path, and the zone 13 of that path passes over a heater resistor HR1 flanked by two equally spaced sensor resistors SR1 and SR2. The sensor can be used to sense flow or pressure difference, and is bidirectional (i. e. it responds to flow or pressure difference in either direction). (The diagram indicates the various relationships only symbolically, not geometrically).

Within the housing 11-12 there is placed a portion 14 of the flow sensing means. Portion 14 typically is a surface of a solid state type of unit, and upon which are placed a plurality of resistors. The heater resistor HR1 and the sensor resistors SR1 and SR2 are affected by the fluid flow and are temperature sensitive, and are shown constrained by brackets to indicate a common area or environment in which these three resistors interact. This area typically is a thin structure formed into the solid state unit in known manner, and therefore thermally isolated from the solid state substrate. There is a further sensor resistor SR3 which is mounted on and thermally coupled to the sensing portion 14, but is not on the thin structure itself. The modified bracket symbol indicates that this resistor is mounted upon the mass of the solid state unit. The exact placement of resistor SR3 with respect to the resistor HR1 is not intended to be represented by the drawing.

The heater resistor HR1 and the sensor resistor SR3 are included in a first bridge circuit 21, with resistors R1 to R4, which are formed of a material which has substantially no temperature dependence of its resistivity. These four resistors R1 to R4 are included in the flow sensing means 14, in a well-known way. The bridge 21 feeds an error feedback circuit comprising an operational amplifier A1 having a negative feedback impedance Z1 to stabilize its output. The error feedback means can be a form of integrator or amplifier. The output of A1 is used as the drive voltage for energizing the bridge 21 ; a resistor R6 is used to ensure that a suitable drive voltage is present on initial operation, and becomes redundant after operation has begun.

In operation, the Wheatstone bridge 21 is fed with the output voltage of the error feedback means A1, which varies as a function of the balance of the bridge 21. The error feedback means A1 keeps the bridge 21 balanced. A change in ambient temperature affects the resistance of the resistor SR3. The error feedback means A1 will react by driving its output voltage to a new value which adjusts the power dissipated, and therefore the temperature and resistance of the heater resistor HR1, thereby rebalancing the bridge. The desired relationship between the ambient temperature and the heater temperature (which are at the resistors SR3 and HR1) is realized by proper selection of the resistors R1 to R4, all of which are temperature insensitive and can be located physically on the same structure 14 or at a separate location. The sensor preferably contains all critical resistance elements, that is the temperature sensitive and the temperature insensitive resistance elements, on a common solid state chip.

The sensor also includes a second bridge 50, which includes the two sensor resistors SR1 and SR2 and two further resistors R7 and R8. The output of this bridge 50 is sensed and amplified by a difference amplifier A2, the output of which is the output of the sensor.

In the bridge 50, the resistors R7 and R8 are selected to control the total series resistance in the legs of the bridge to establish the amount of self-heating of the resistors utilized. This effects the self-heating of the flow responsive resistors SR1 and SR2, and in turn affects the overall operation of the bridge so that it functions properly with bridge 21.

With the variation of voltage of the error feedback means A1, the first bridge 21 is kept balanced. The output of the error feedback means is also supplied to the second bridge 50 which in effect changes the drive current of the second bridge 50 so that the resistors SR1 and SR2 are properly controlled. Current is increased through these resistors as the ambient temperature is increased (as sensed by the resistor SR3). The described temperature dependent drive of the second bridge 50 helps compensate the entire flow sensor for ambient temperature changes.

## Claims

1. A fluid flow rate sensor comprising a heater resistor (HR1) in the fluid stream (13), and a sensor bridge (50) including sensor resistor means (SR1, SR2) in the fluid stream beyond the heater resistor, characterized in that the heater resistor is included in a heater bridge (21) including also a temperature responsive resistor (SR3) thermally coupled to the heater resistor and/or the sensor resistor means but out of the fluid stream, the output of the heater bridge being used to energize at least one of the two bridges.

2. A fluid flow rate sensor according to claim 1, characterized in that the output of the heater bridge energizes the heater bridge.

3. A fluid flow rate sensor according to claim 2, characterized in that the output of the heater bridge also energizes the sensor bridge.

4. A fluid flow rate sensor according to any previous claim, characterized in that the sensor resistor means comprise two sensor resistors (SR1, SR2) arranged on opposite sides of the heater resistor (HR1).

5. A fluid flow rate sensor according to any previous claim, characterized in that the sensor bridge includes further resistor means (R7, R8) which, together with the sensor resistor means, cause the sensor resistor means to be self-heating at low but not high fluid flow rates.

6. A fluid flow sensor according to any previous claim, characterized in that the heater resistor (HR1) is temperature sensitive.

7. A fluid flow sensor according to any previous claim characterized in that the heater bridge includes also temperature insensitive resistors (R1-R4) formed on a common substrate with the temperature sensitive resistors and sensor resistor means.

**Patentansprüche**

1. Sensor für Fluidfluß-Rate mit einem Heizwiderstand (HR1) in dem Fluidstrom (13), und einer Sensorbrücke (50) mit Sensor-Widerstandseinrichtungen (SR1, SR2) in dem Fluidstrom hinter dem Heizwiderstand, dadurch gekennzeichnet, daß der Heizwiderstand in einer Heizbrücke (21) enthalten ist, welche ferner einen temperaturempfindlichen Widerstand (SR3) aufweist, der thermisch mit dem Heizwiderstand und/oder den Sensor-Widerstandseinrichtungen aber außerhalb des Fluidstroms gekoppelt ist, wobei der Ausgang der Heizbrücke verwendet wird, um wenigstens eine der zwei Brücken einzuschalten.

2. Sensor für Fluidfluß-Rate nach Anspruch 1, dadurch gekennzeichnet, daß der Ausgang der Heizbrücke die Heizbrücke einschaltet.

3. Sensor für Fluidfluß-Rate nach Anspruch 2, dadurch gekennzeichnet, daß der Ausgang der Heizbrücke ferner die Sensorbrücke einschaltet.

4. Sensor für Fluidfluß-Rate nach einem vorhergehenden Anspruch, dadurch gekennzeichnet, daß die Sensorwiderstandseinrichtungen zwei Sensorwiderstände (SR1, SR2) aufweisen, die auf gegenüberliegenden Seiten des Heizwiderstandes (HR1) angeordnet sind.

5. Sensor für Fluidfluß-Rate nach einem vorhergehenden Anspruch, dadurch gekennzeichnet, daß die Sensorbrücke ferner Widerstandseinrichtungen (R7, R8) aufweist, welche zusammen mit den Sensor-Widerstandseinrichtungen die Sensor-Widerstandseinrichtungen zu einer Selbsterwärmung bei geringen aber nicht hohen Fluidfluß-Raten veranlassen.

6. Sensor für Fluidfluß nach einem vorhergehenden Anspruch, dadurch gekennzeichnet, daß der Heizwiderstand (HR1) temperaturempfindlich ist.

7. Sensor für Fluidfluß nach einem vorhergehenden Anspruch, dadurch gekennzeichnet, daß die Heizbrücke ferner temperaturunempfindlich Widerstände (R1-R4) aufweist, welche auf einem gemeinsamen Substrat mit den temperaturempfindlichen Widerständen und den Sensor-Widerstandseinrichtungen gebildet sind.

**Revendications**

1. Palpeur de vitesse de courant d'un fluide comprenant une résistance chauffante (HR1) dans le courant d'un fluide (13) et un pont palpeur (50) comprenant des moyens de résistance de palpeur (SR1, SR2) dans le courant du fluide derrière la résistance chauffante, caractérisé en ce que la résistance chauffante fait partie d'un pont chauffant (21) comprenant également une résistance sensible à la température (SR3) couplée thermiquement à la résistance chauffante et/ou aux moyens de résistance de palpeur mais se trouvant hors du courant du fluide, et en ce que la sortie du pont chauffant est utilisée pour exciter au moins un des deux ponts.

2. Palpeur de vitesse de courant d'un fluide selon la revendication 1 caractérisé en ce que la sortie du pont chauffant excite le pont chauffant.

3. Palpeur de vitesse de courant d'un fluide selon la revendication 2 caractérisé en ce que la sortie du pont chauffant excite également le pont palpeur.

4. Palpeur de vitesse de courant d'un fluide selon l'une quelconque des revendications précédentes caractérisé en ce que les moyens de résistance palpeur comprennent deux résistances de palpeur (SR1, SR2) disposées à des parties opposées de la résistance chauffante (HR1).

5. Palpeur de vitesse de courant d'un fluide selon l'une quelconque des revendications précédentes caractérisé en ce que le pont palpeur comprend en plus des moyens de résistance (R7, R8) qui, avec les moyens de résistance de palpeur, rendent les moyens de résistance de palpeur auto-chauffantes à des vitesses de courant d'un fluide peu élevées et non à des grandes vitesses.

6. Palpeur de vitesse de courant d'un fluide selon l'une quelconque des revendications précédentes, caractérisé en ce que la résistance chauffante (HR1) est sensible à la température.

7. Palpeur de vitesse de courant d'un fluide selon l'une quelconque des revendications précédentes caractérisé en ce que le pont chauffant inclut également des résistances insensibles à la température (R1-R4) formées sur un substrat commun avec les résistances sensibles à la température et les moyens de résistance de palpeur.

EP 0 164 885 B1